(19) Europäisches Patentamt
European Patent Office
Office européen des brevets

(11) **EP 2 756 972 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(51) Int Cl.:
***B60G 11/08*** *(2006.01)*   ***B60G 11/10*** *(2006.01)*
***B60G 11/12*** *(2006.01)*

(21) Anmeldenummer: **13198060.9**

(22) Anmeldetag: **18.12.2013**

(54) **Abstützanordnung einer Querblattfedereinrichtung an einem Aufbau eines Kraftwagens sowie Kraftwagen mit einer solchen Abstützanordnung**

Support structure of a transverse leaf spring on the superstructure of a motor vehicle and motor vehicle with such a support structure

Système de support d'un dispositif de ressort à lame transversale sur une structure de véhicule automobile et véhicule automobile doté d'un tel système de support

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2013 DE 102013000651**

(43) Veröffentlichungstag der Anmeldung:
**23.07.2014 Patentblatt 2014/30**

(73) Patentinhaber: **Volkswagen Aktiengesellschaft 38440 Wolfsburg (DE)**

(72) Erfinder: **Rechter, Hartmut 38162 Weddel (DE)**

(56) Entgegenhaltungen:
EP-A1- 0 524 916    EP-A1- 1 155 882
EP-A2- 0 994 270    DE-A1-102008 028 273
FR-A1- 2 733 464    JP-A- H04 254 210
JP-A- H07 179 112    US-A- 3 181 641

EP 2 756 972 B1

## Beschreibung

Die Erfindung betrifft eine Abstützanordnung einer Querblattfedereinrichtung an einem Aufbau eines Kraftwagens, insbesondere eines Personenkraftwagens, gemäß dem Oberbegriff von Patentanspruch 1 sowie einen Kraftwagen mit einer solchen Abstützanordnung.

Aus dem Serienfahrzeugbau sind Radaufhängungen von Kraftwagen bekannt, über welche seitliche Fahrzeugräder an einem Aufbau, beispielsweise einer Karosserie, des jeweiligen Kraftwagens abgestützt sind. Insbesondere bei Personenkraftwagen ist dabei die sogenannte Einzelradaufhängung weit verbreitet.

Ferner sind aus dem allgemeinen Stand der Technik auch Querblattfedereinrichtungen bekannt, über welche seitliche Fahrzeugräder an einem Aufbau eines Kraftwagens abgestützt sind. Dazu ist die jeweilige Querblattfedereinrichtung selbst im Rahmen einer Abstützanordnung am Aufbau abgestützt.

Abstützanordnungen von Querblattfedereinrichtungen an einem jeweiligen Aufbau eines Kraftwagens sind beispielsweise der DE 42 01 180 A1, der EP 1 155 882 A1 und der US 1 776,732 A als bekannt zu entnehmen.

Schließlich offenbart auch die EP 0 994 270 A2 eine Abstützanordnung einer Querblattfedereinrichtung an einem Aufbau eines Kraftwagens. Bei dieser Abstützanordnung umfasst die Querblattfedereinrichtung wenigstens eine, sich in Fahrzeugquerrichtung erstreckende Querblattfeder. Die Querblattfedereinrichtung ist dabei am Aufbau über wenigstens zwei Lenkerelemente abgestützt. Die Lenkerelemente sind an jeweiligen, in Fahrzeugquerrichtung voneinander beabstandeten, ersten Lagerstellen gelenkig mit dem Aufbau gekoppelt. Ferner sind die Lenkerelemente an jeweiligen, in Fahrzeugquerrichtung voneinander beabstandeten, zweiten Lagerstellen gelenkig mit der Querblattfedereinrichtung gekoppelt. Hierbei sind die zweiten Lagerstellen in Fahrzeughochrichtung tiefer als die ersten Lagerstellen angeordnet. Mit anderen Worten sind die zweiten Lagerstellen bezogen auf die Fahrzeughochrichtung auf einem tieferen Höhenniveau angeordnet als die ersten Lagerstellen.

Infolge dieser Abstützung ist die Querblattfedereinrichtung gelenkig am Aufbau abgestützt. Über die Querblattfedereinrichtung können dabei auf besonders kostengünstige Weise seitliche Fahrzeugräder des Kraftwagens am Aufbau angebunden werden. Gleichzeitig sind mittels der Querblattfedereinrichtung vorteilhafte Fahreigenschaften realisierbar.

Zudem offenbart die JP H07 179112 A , die als nächstliegender Stand der Technik betrachtet wird, eine Abstützanordnung gemäß des Oberbegriffs des ersten Anspruchs, bei der die ersten Lagerstellen am Aufbau einen kleineren Abstand aufweisen als die zweiten Lagerstellen an der Querblettfedereinrichtung.

Es ist Aufgabe der vorliegenden Erfindung, eine Abstützanordnung einer Querblattfedereinrichtung an einem Aufbau eines Kraftwagens der eingangs genannten Art sowie einen Kraftwagen mit wenigstens einer solchen Abstützanordnung bereitzustellen, bei welchen übermäßige Wankbewegungen des Aufbaus, beispielsweise bei Kurvenfahrten, gering gehalten oder vermieden werden können.

Diese Aufgabe wird durch eine Abstützanordnung mit den Merkmalen des Patentanspruchs 1 sowie durch einen Kraftwagen mit wenigstens einer solchen Abstützanordnung mit den Merkmalen des Patentanspruchs 5 gelöst.

Ein erster Aspekt der Erfindung betrifft eine Abstützanordnung einer Querblattfedereinrichtung an einem Aufbau, insbesondere einer Karosserie, eines Kraftwagens bzw. eines Fahrzeugs, insbesondere eines Personenkraftwagens. Bei dieser Abstützanordnung umfasst die Querblattfedereinrichtung wenigstens eine sich in Fahrzeugquerrichtung erstreckende Querblattfeder. Die Querblattfedereinrichtung ist am Aufbau über wenigstens zwei Lenkerelemente abgestützt.

Die Querblattfedereinrichtung ist beispielsweise einer Radaufhängung des Kraftwagens zugeordnet und dient dazu, seitliche Fahrzeugräder des Kraftwagens am Aufbau dieses anzubinden.

Die Lenkerelemente sind an jeweiligen, in Fahrzeugquerrichtung voneinander beabstandeten, ersten Lagerstellen gelenkig mit dem Aufbau gekoppelt. Ferner sind die Lenkerelemente an jeweiligen, in Fahrzeugquerrichtung voneinander beabstandeten, zweiten Lagerstellen gelenkig mit der Querblattfedereinrichtung gekoppelt. Die zweiten Lagerstellen sind dabei in Fahrzeughochrichtung tiefer als die ersten Lagerstellen angeordnet. Dies bedeutet, dass die zweiten Lagerstellen bezogen auf die Fahrzeughochrichtung auf einem tieferen Höhenniveau angeordnet sind als die ersten Lagerstellen.

Um nun übermäßige Wankbewegungen des Aufbaus, beispielsweise bei einer Kurvenfahrt des Kraftwagens, auf einfache und besonders kostengünstige Weise vermeiden zu können, ist es erfindungsgemäß vorgesehen, dass der in Fahrzeugquerrichtung verlaufende Abstand zwischen den zweiten Lagerstellen größer als der in Fahrzeugquerrichtung verlaufende Abstand zwischen den ersten Lagerstellen ist. Mit anderen Worten sind die zweiten, tieferen oder unteren Lagerstellen weiter, d.h. über eine größere Strecke in Fahrzeugquerrichtung voneinander beabstandet als die ersten, oberen Lagerstellen.

Rollt beispielsweise der Kraftwagen über seitliche Fahrzeugräder, welche über die Querblattfedereinrichtung und deren Abstützung am Aufbau angebunden sind, auf einer Fahrbahn ab und durchfährt der Kraftwagen eine Kurve, so wirkt eine Beschleunigungskraft auf den Aufbau. Diese Beschleunigungskraft ist dabei bezogen auf die Kurve nach außen gerichtet und bewirkt - falls keine entsprechenden Gegenmaßnahmen getroffen sind - ein Wanken des Aufbaus nach außen.

Bei einer solchen Kurvenfahrt kommt es zudem zu auf die Fahrzeugräder und insbesondere auf deren Reifen quer zur Abrollrichtung wirkenden Seitenkräften, welche der Beschleunigungskraft entgegengesetzt sind und den Kraftwagen - bei einer angemessenen Fahrzeuggeschwindigkeit - in der Kurve halten.

Aufgrund der geschilderten Anordnung der Lagerstellen und ihrer jeweiligen Abstände können die Seitenkräfte in den Lagerstellen abgestützt werden und es kommt zu Reaktionskräften und daraus resultierenden Reaktionsmomenten, welche der Wankbewegung des Aufbaus entgegenwirken und somit eine Wankbewegung des Aufbaus bezogen auf die Kurve nach außen vermeiden oder zumindest gering halten können. Bei der erfindungsgemäßen Abstützanordnung ist somit eine Wankabstützung des Aufbaus auf besonders einfache Weise geschaffen, ohne dass beispielsweise Aktoren wie aktive Dämpfer zur Abstützung vorgesehen werden müssten. Die Wankabstützung bei der Abstützanordnung erfolgt vielmehr passiv oder selbsttätig.

In besonders vorteilhafter Ausgestaltung der Erfindung sind die ersten Lagerstellen in Fahrzeugquerrichtung zwischen den zweiten Lagerstellen angeordnet. Hierdurch ist eine besonders effektive Wankabstützung realisierbar. Ferner kann dadurch eine effektive Wankabstützung sowohl bei Rechtskurven als auch bei Linkskurven realisiert werden.

Als besonders vorteilhaft hat es sich gezeigt, wenn die Lenkerelemente an den ersten Lagerstellen um jeweilige, in Fahrzeuglängsrichtung verlaufende Schwenkachsen relativ zu dem Aufbau verschwenkbar mit diesem gekoppelt sind und/oder wenn die Lenkerelemente an den zweiten Lagerstellen um jeweilige, in Fahrzeuglängsrichtung verlaufende Schwenkachsen relativ zu der Querblattfedereinrichtung verschwenkbar mit dieser gekoppelt sind. Hierdurch kann eine besonders steife Abstützung der Querblattfedereinrichtung am Aufbau realisiert werden. Ferner können die Wankbewegungen des Aufbaus besonders gering gehalten werden.

Bei der Erfindung sind die zweiten Lagerstellen in Fahrzeughochrichtung tiefer als die Querblattfeder, insbesondere als die Querblattfedereinrichtung, angeordnet. Mit anderen Worten sind die zweiten Lagerstellen in Fahrzeughochrichtung unterhalb der Querblattfedereinrichtung bzw. der Querblattfeder angeordnet. Hierdurch kann ein besonders großer, in Fahrzeughochrichtung verlaufender Abstand zwischen den zweiten Lagerstellen und den ersten Lagerstellen geschaffen werden bei gleichzeitiger Realisierbarkeit einer hinreichenden Bodenfreiheit sowie einer nur sehr geringen Gesamthöhe des Kraftwagens. Aufgrund des großen, in Fahrzeughochrichtung verlaufenden Abstands zwischen den ersten Lagerstellen und den zweiten Lagerstellen können sehr große Hebelarme zwischen diesen geschaffen werden, so dass aus den an den Rädern angreifenden Seitenkräften hohe Gegenkräfte und Gegenmomente resultieren. Diese können dann dem Wanken des Aufbaus besonders gut entgegenwirken.

Ein besonders großer Abstand zwischen den zweiten Lagerstellen und den ersten Lagerstellen ist insbesondere dann realisierbar, wenn die Lenkerelemente mit der Querblattfedereinrichtung über jeweilige Konsolenelemente gekoppelt sind, wobei die Konsolenelemente an einer vom Aufbau in Fahrzeughochrichtung nach unten weg weisenden Unterseite der Querblattfedereinrichtung, insbesondere der Querblattfeder, angeordnet sind. Ferner kann dadurch auch der Bauraumbedarf der Abstützanordnung besonders gering gehalten werden.

Ein zweiter Aspekt der Erfindung betrifft einen Kraftwagen mit einer Radaufhängung, welche wenigstens eine erfindungsgemäße Abstützanordnung aufweist. Dabei sind seitliche Fahrzeugräder des Kraftwagens unter Vermittlung der Querblattfedereinrichtung am Aufbau des Kraftwagens abgestützt. Vorteilhafte Ausgestaltungen des ersten Aspekts der Erfindung sind als vorteilhafte Ausgestaltungen des zweiten Aspekts der Erfindung anzusehen und umgekehrt.

Bei dem erfindungsgemäßen Kraftwagen sind besonders vorteilhafte und insbesondere komfortable Fahreigenschaften auf einfache Weise realisierbar, da Wankbewegungen des Aufbaus, insbesondere der Karosserie des Kraftwagens, beispielsweise bei Kurvenfahrten vermieden oder zumindest sehr gering gehalten werden. Diese Wankabstützung oder Wankkompensation ist dabei ohne aktive, kosten-, bauraum- und gewichtsintensive Aktoren der Radaufhängung realisierbar.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in:

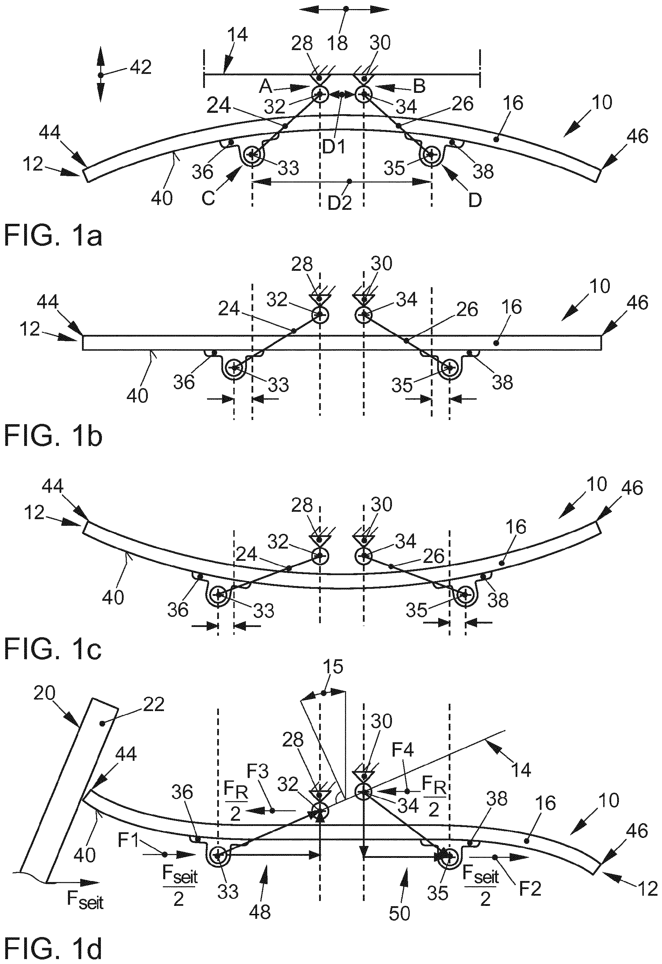

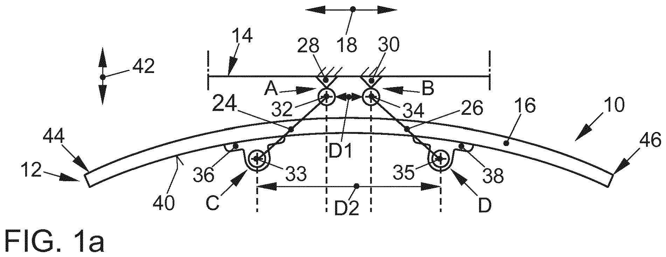

Fig. 1 a    eine schematische Draufsicht einer Abstützanordnung einer Querblattfedereinrichtung an einem Aufbau eines Kraftwagens, bei welcher die Querblattfedereinrichtung über wenigstens zwei Lenkerelemente am Aufbau abgestützt ist, wobei ein in Fahrzeugquerrichtung verlaufender Abstand zwischen zwei zweiten der Lagerstellen größer als ein in Fahrzeugquerrichtung verlaufender Abstand zwischen zwei ersten der Lagerstellen ist, und wobei eine nach unten gebogene Stellung der Querblattfedereinrichtung gezeigt ist;

Fig. 1 b    eine weitere Draufsicht der Abstützanordnung, wobei sich die Querblattfedereinrichtung in einer sogenannten Strecklage befindet;

Fig. 1 c eine weitere schematische Draufsicht der Abstützanordnung, wobei die Querblattfedereinrichtung gegenüber der Strecklage nach oben gebogen ist; und

Fig. 1d eine weitere schematische Draufsicht der Abstützanordnung, wobei die Querblattfedereinrichtung in einer Stellung gezeigt ist, zu der es beispielsweise bei einer Fahrt des Kraftwagens durch eine Rechtskurve kommt.

In den Figuren sind gleiche oder funktionsgleiche Elemente mit gleichen Bezugszeichen versehen.

Fig. 1a zeigt eine im Ganzen mit 10 bezeichnete Abstützanordnung einer Querblattfedereinrichtung 12 an einem in Fig. 1a nur sehr schematisch und ausschnittsweise dargestellten Aufbau 14 eines Kraftwagens. Bei dem Aufbau 14 handelt es sich beispielsweise um eine Karosserie des beispielsweise als Personenkraftwagen ausgebildeten Kraftwagens. Die Querblattfedereinrichtung 12 kann dabei zumindest mittelbar am Aufbau 14 abgestützt sein. Hierzu ist die Querblattfedereinrichtung 12 beispielsweise an einem am Aufbau befestigten Hilfsrahmen abgestützt. Ferner kann die Querblattfedereinrichtung 12 auch beispielsweise an einem Träger, insbesondere an einem Längsträger oder Querträger des Aufbaus, abgestützt sein.

Die Querblattfedereinrichtung 12 umfasst vorliegend eine Querblattfeder 16, welche sich in Fahrzeugquerrichtung erstreckt. Die Fahrzeugquerrichtung ist dabei durch einen Richtungspfeil 18 in Fig. 1a veranschaulicht. Die Querblattfedereinrichtung 12 kann auch mehrere, sich zumindest im Wesentlichen in Fahrzeugquerrichtung erstreckende Blattfedern umfassen, welche einem Querblattfederpaket zugeordnet sind. Das zuvor und im Folgenden zur Querblattfeder 16 Gesagte kann somit auch ohne weiteres auf ein solches Querblattfederpaket angewendet werden.

Wie in Zusammenschau mit Fig. 1d erkennbar ist, ist die Querblattfedereinrichtung 12 einer Radaufhängung des Kraftwagens zugeordnet. Dabei dient die Querblattfedereinrichtung 12 zur Anbindung von seitlichen Fahrzeugrädern des Kraftwagens am Aufbau 14, wobei von diesen seitlichen Fahrzeugrädern in Fig. 1d ein linkes seitliches Fahrzeugrad 20 erkennbar ist. Das Fahrzeugrad 20 umfasst einen Reifen 22, über den der Kraftwagen auf einer Fahrbahn abrollen kann. Der Reifen 22 ist auf eine in Fig. 1d nicht erkennbare Felge des Fahrzeugrads 20 aufgezogen, wobei das Fahrzeugrad 20 über die Felge an der Querblattfedereinrichtung 12 zumindest mittelbar montiert ist.

Wie aus Fig. 1a erkennbar ist, umfasst die Abstützanordnung 10 wenigstens zwei Lenkerelemente 24, 26, welche in Fahrzeugquerrichtung voneinander beabstandet sind. Die Querblattfedereinrichtung 12 ist dabei über die Lenkerelemente 24, 26 am Aufbau 14 abgestützt. Dazu sind die Lenkerelemente 24, 26 an jeweiligen, ersten Lagerstellen A, B gelenkig mit dem Aufbau 14 gekoppelt. Hierzu sind beispielsweise in Fig. 1a sehr schematisch dargestellte Konsolenelemente 28, 30 vorgesehen, über die die Lenkerelemente 24, 26 an den ersten Lagerstellen A, B gelenkig am Aufbau 14 angebunden sind. Die Lenkerelemente 24, 26 sind dabei über die Konsolenelemente 28, 30 am Aufbau 14 um jeweilige, sich zumindest im Wesentlichen in Fahrzeuglängsrichtung erstreckende Schwenkachsen 32, 34 relativ zum Aufbau 14 verschwenkbar gehalten.

Ferner sind die Lenkerelemente 24, 26 an jeweiligen, zweiten Lagerstellen C, D gelenkig mit der Querblattfedereinrichtung 12 gekoppelt. Hierzu sind Konsolenelemente 36, 38 vorgesehen, über die die Lenkerelemente 24, 26 an der Querblattfedereinrichtung 12 relativ zur Querblattfedereinrichtung 12 um jeweilige, in Fahrzeuglängsrichtung verlaufend Schwenkachsen verschwenkbar gehalten sind. Die Konsolenelemente 36, 38 sind dabei an einer vom Aufbau 14 in Fahrzeughochrichtung nach unten weg weisenden Unterseite 40 der Querblattfedereinrichtung 12 angeordnet. Die Konsolenelemente 36, 38 müssen nicht ausschließlich unterhalb der Querblattfedereinrichtung 12 angeordnet sein sondern können sich auch zumindest teilweise oberhalb dieser befinden.

Wie Fig. 1a ferner zu entnehmen ist, sind die Lagerstellen A, B in Fahrzeugquerrichtung voneinander beabstandet. Mit anderen Worten sind die Lagerstellen A, B in einem in Fahrzeugquerrichtung verlaufenden Abstand D1 voneinander angeordnet. Auch die Lagerstellen C, D sind in Fahrzeugquerrichtung voneinander beabstandet. Mit anderen Worten sind auch die Lagerstellen C, D in einem in Fahrzeugquerrichtung verlaufenden Abstand D2 zueinander angeordnet. Darüber hinaus sind die zweiten Lagerstellen C, D in Fahrzeughochrichtung, welche in Fig. 1a durch einen Richtungspfeil 42 veranschaulicht ist, tiefer als die ersten Lagerstellen A, B angeordnet. Mit anderen Worten sind die Lagerstellen C, D in Fahrzeughochrichtung unterhalb der erste Lagerstellen A, B angeordnet.

Der in Fahrzeugquerrichtung verlaufende, zweite Abstand D2 zwischen den zweiten Lagerstellen C, D ist größer als der in Fahrzeugquerrichtung verlaufende, erste Abstand D1 zwischen den ersten Lagerstellen A, B. Wie im Folgenden erläutert ist, kann hierdurch eine sehr effektive Wankabstützung des Aufbaus 14 auf einfache Weise realisiert werden, so dass ein unerwünschtes Wanken des Aufbaus 14 beispielsweise bei einer Kurvenfahrt des Kraftwagens vermieden oder zumindest gering gehalten werden kann. Dieser vorteilhaften Wankabstützung kommt auch zugute, dass die ersten Lagerstellen A, B, welche üblicherweise auch als Lagerpunkte bezeichnet werden, in Fahrzeugquerrichtung zwischen den zweiten Lagerstellen C, D, welche üblicherweise als Lagerpunkte bezeichnet werden, angeordnet sind. Die Lagerstellen A, C sind dabei bezogen auf eine Mittelebene des Kraftwagens achsensymmetrisch zu den Lagerstellen B, D angeordnet.

Fig. 1a zeigt die Querblattfedereinrichtung 12 in einer nach unten gebogenen Stellung, in welcher seitliche Endbereiche 44, 46 der Querblattfedereinrichtung 12, in denen die seitlichen Fahrzeugräder an der Querblattfedereinrichtung 12 angebunden sind, ausgehend von einer in Fig. 1b gezeigten Strecklage nach unten gebogen sind. Dies führt zu einer Krümmung der Querblattfedereinrichtung 12 und insbesondere der Querblattfeder 16, welche in Fahrzeughochrichtung nach oben konvex ist. Die Querblattfeder 16 nimmt diese nach unten gebogenen Stellung bei nachlassender oder wegfallender Radaufstandskraft ein, da dies ihrer Geometrie entspricht, sofern keine oder nur geringe äußere Kräfte auf sie wirken und da das Eigengewicht der seitlichen Fahrzeugräder die äußeren Federenden der Querblattfeder 16 nach unten ziehen.

In der in Fig. 1b veranschaulichten Strecklage erstreckt sich die Querblattfeder 16 zumindest im Wesentlichen gerade in Fahrzeugquerrichtung. Zu dieser Strecklage kommt es beispielsweise dann, wenn der Kraftwagen auf einer zumindest im Wesentlichen horizontalen Ebene steht und nicht unzulässig stark beladen ist.

Fig. 1c zeigt eine sogenannte nach oben gebogene Stellung der Querblattfedereinrichtung 12, in der die Endbereiche 44, 46 gegenüber der Strecklage nach oben gebogen sind. In der Strecklage weist die Querblattfeder 16 eine Wölbung auf, welche in Fahrzeughochrichtung nach unten konvex und demzufolge in Fahrzeughochrichtung nach oben konkav ist. Zu der nach oben gebogenen Stellung der Querblattfeder 16 kommt es beispielsweise dann, wenn ein sehr hohes Gewicht auf die seitlichen Fahrzeugräder lastet, beispielsweise, wenn der Kraftwagen überladen ist.

Ferner kann es zu der nach oben gebogenen Stellung beispielsweise dann kommen, wenn der Kraftwagen mit relativ hoher Geschwindigkeit durch eine Senke fährt, so dass der Aufbau 14 aufgrund seiner Trägheit in Richtung der Fahrbahn beschleunigt wird und auf die seitlichen Fahrzeugräder relativ hohe Kräfte ausübt. Dementsprechend kann es zur nach unten gebogenen Stellung der Querblattfedereinrichtung 12 beispielsweise dann kommen, wenn der Kraftwagen mit relativ hoher Geschwindigkeit über eine Kuppe fährt, so dass sich der Aufbau 14 aufgrund seiner Trägheit von der Fahrbahn weg bewegt und somit auf die seitlichen Fahrzeugräder gegenüber der Strecklage geringere Kräfte ausübt, die über die seitlichen Fahrzeugräder auf der Fahrbahn abzustützen sind.

Fig. 1d zeigt die Querblattfedereinrichtung 12 und insbesondere die Querblattfeder 16 in einer gegenüber der Strecklage gebogenen Stellung, zu der es beispielsweise bei einer Fahrt des Kraftwagens durch eine Rechtskurve kommt. Wie aus Fig. 1d erkennbar ist, ist der bezogen auf die Bildebene von Fig. 1d rechte Endbereich 46 gegenüber der Strecklage nach unten gebogen, während der linke Endbereich 44 gegenüber der Strecklage nach oben gebogen ist.

Durch gestrichelte Linien sind in Fig. 1a-d Verschiebungen der Lagerstellen A, B, C, D veranschaulicht, zu denen es bezogen auf die Strecklage kommt, wenn sich die Querblattfedereinrichtung 12 gegenüber der Strecklage verformt, d.h. wenn sich die Querblattfedereinrichtung 12 ausgehend von der Strecklage verformt.

Aus einer Zusammenschau von Fig. 1a mit Fig. 1b ist erkennbar, dass sich die Lagerstellen C, D jeweils in Fahrzeugquerrichtung nach innen bewegen, wenn sich die Querblattfeder 16 aus der Strecklage in die nach unten gebogene Stellung verformt. Dementsprechend ist aus einer Zusammenschau von Fig. 1b mit Fig. 1c erkennbar, dass sich die Lagerstellen C, D jeweils in Fahrzeugquerrichtung nach außen verschieben, wenn es zu einer Verformung der Querblattfedereinrichtung 12 und insbesondere der Querblattfeder 16 aus der Strecklage in die nach oben gebogene Stellung kommt.

Verformt sich die Querblattfedereinrichtung 12 ausgehend von der Strecklage in die in Fig. 1d gezeigte Stellung, so bewegt sich demzufolge die Lagerstelle C in Fahrzeugquerrichtung nach außen, während sich die Lagerstelle D in Fahrzeugquerrichtung nach innen bewegt. Dies ist der Fall, da bei einer Rechtskurve auf das kurvenäußere und in Fig. 1d erkennbare Fahrzeugrad 20 größere Normalkräfte wirken als auf das kurveninnere, rechte und in Fig. 1d nicht erkennbare Fahrzeugrad, welches über die Querblattfedereinrichtung 12 am Aufbau 14 angebunden ist. Dementsprechend sind über das linke Fahrzeugrad 20 größere Kräfte auf der Fahrbahn abzustützen als über das rechte Fahrzeugrad.

Bei dieser Fahrt durch die Rechtskurve kann es zu einer Neigung des Aufbaus 14 kommen, wie es durch einen Doppelpfeil 15 angedeutet ist. Dabei neigt sich der Aufbau 14 bezogen auf die Rechtskurve nach außen, wobei diese Neigung in Fig. 1d lediglich der Veranschaulichung des Wirkprinzips der Abstützanordnung 10 dient, da die Neigung des Aufbaus 14, welche üblicherweise auch als Wanken oder Wankbewegung bezeichnet wird, mittels der Abstützanordnung 10 vermieden oder zumindest gering gehalten werden kann.

Wie anhand von Fig. 1d am Beispiel des kurvenäußeren Fahrzeugrads 20 ferner veranschaulicht ist, wirkt auf das Fahrzeugrad 20 eine Seitenkraft $F_{seit}$, welche einer aus der Kurvenfahrt resultierende Reaktionskraft ist und den Kraftwagen in der Kurve hält.

Wie in Fig. 1d durch Kraftpfeile F1, F2 veranschaulicht ist, können an den zweiten Lagerstellen C, D jeweilige, mit $\frac{F_{seit}}{2}$ bezeichnete Hälften der Seitenkraft $F_{seit}$ abgestützt werden. Anhand eines jeweiligen Kraftdreiecks 48, 50 ist darüber hinaus veranschaulicht, dass aus dieser Abstützung der Seitenkraft $F_{seit}$ an den zwei-

ten Lagerstellen C, D zu Reaktionskräften $\frac{F_R}{2}$ in den oberen, ersten Lagerstellen A, B kommt. Diese jeweiligen Reaktionskräfte $\frac{F_R}{2}$ sind in Fig. 1d durch Kraftpfeile F3, F4 veranschaulicht.

Aus den an den Lagerstellen C, D abgestützten Hälften $\frac{F_{seit}}{2}$ der Seitenkraft $F_{seit}$ und den jeweiligen Reaktionskräften $\frac{F_R}{2}$ in den ersten Lagerstellen A, B resultiert ein Drehmoment, welches der Bewegung der Lagerstelle A in Fahrzeughochrichtung nach unten infolge der Fahrt durch die Rechtskurve entgegenwirkt und die Lagerstelle A in Fahrzeughochrichtung nach oben bewegt oder ausgehend von einer Geradeausfahrt zumindest im Wesentlichen auf gleichbleibender Höhe hält. Mit anderen Worten ergeben sich aufgrund der entsprechenden Anordnung und Ausgestaltung der Lagerstellen A, B, C, D und ihrer Abstände D1 und D2 bei Kurvenfahrten Gegenmomente und Gegenkräfte im Aufbau 14, welche Wankbewegungen des Aufbaus 14 zumindest gering halten.

Der Faktor 0,5 bzw. $\frac{1}{2}$, mit welchem $F_R$ und $F_{seit}$ als Reaktionskräfte in den Lagerstellen A, B, C und D belegt sind, ist vorliegend willkürlich gewählt und dient der Veranschaulichung.

Zur Darstellung eines besonders großen, in Fahrzeughochrichtung verlaufenden Abstands der unteren, zweiten Lagerstellen C, D zu den oberen, ersten Lagerstellen A, B sind die Lenkelemente 24, 26 über die Konsolenelemente 36, 38 an der Querblattfedereinrichtung 12 angebunden. Darüber hinaus sind die Lagerstellen C, D unterhalb der Querblattfedereinrichtung 12 angeordnet. Hierdurch kann auch eine hinreichende Bodenfreiheit des Kraftwagens realisiert werden.

## Patentansprüche

1. Abstützanordnung (10) einer Querblattfedereinrichtung (12) an einem Aufbau (14) eines Kraftwagens, bei welcher die wenigstens eine, sich in Fahrzeugquerrichtung erstreckende Querblattfeder (16) umfassende Querblattfedereinrichtung (12) am Aufbau (14) über wenigstens zwei Lenkerelemente (24, 26) abgestützt ist, welche an jeweiligen, in Fahrzeugquerrichtung voneinander beabstandeten, ersten Lagerstellen (A, B) gelenkig mit dem Aufbau (14) und an jeweiligen, in Fahrzeughochrichtung tiefer als die ersten Lagerstellen (A, B) angeordneten und in Fahrzeugquerrichtung voneinander beabstandeten, zweiten Lagerstellen (C, D) gelenkig mit der Querblattfedereinrichtung (12) gekoppelt sind, und der in Fahrzeugquerrichtung verlaufende Abstand (D2) zwischen den zweiten Lagerstellen (C, D) größer als der in Fahrzeugquerrichtung verlaufende Abstand (D1) zwischen den ersten Lagerstellen (A, B) ist,
**dadurch gekennzeichnet, dass**
die zweiten Lagerstellen (C, D) in Fahrzeughochrichtung tiefer als die Querblattfeder (16) angeordnet sind.

2. Abstützanordnung (10) nach Anspruch 1,
**dadurch gekennzeichnet, dass**
die ersten Lagerstellen (A, B) in Fahrzeugquerrichtung zwischen den zweiten Lagerstellen (C, D) angeordnet sind.

3. Abstützanordnung (10) nach einem der Ansprüche 1 oder 2,
**dadurch gekennzeichnet, dass**
die Lenkerelemente (24, 26) an den ersten Lagerstellen (A, B) um jeweilige, in Fahrzeuglängsrichtung verlaufende Schwenkachsen (32, 34) relativ zu dem Aufbau (14) verschwenkbar mit diesem gekoppelt sind und/oder dass die Lenkerelemente (24, 26) an den zweiten Lagerstellen (C, D) um jeweilige, in Fahrzeuglängsrichtung verlaufende Schwenkachsen (33, 35) relativ zu der Querblattfedereinrichtung (12) verschwenkbar mit dieser gekoppelt sind.

4. Abstützanordnung (10) nach Anspruch 3,
**dadurch gekennzeichnet, dass**
die Lenkerelemente (24, 26) mit der Querblattfedereinrichtung (12) über jeweilige Konsolenelemente (36, 38) gekoppelt sind, welche an einer vom Aufbau (14) in Fahrzeughochrichtung nach unten weg weisenden Unterseite (40) der Querblattfedereinrichtung (12), insbesondere der Querblattfeder (16), angeordnet sind.

5. Kraftwagen mit einer Radaufhängung, welche wenigstens eine Abstützanordnung (10) nach einem der vorhergehenden Ansprüche aufweist, wobei seitliche Fahrzeugräder (20) des Kraftwagens unter Vermittlung der Querblattfedereinrichtung (12) am Aufbau (14) des Kraftwagens abgestützt sind.

## Claims

1. Support arrangement (10) of a transverse leaf spring device (12) on a body (14) of a motor vehicle, in which the transverse leaf spring device (12) comprising at least one transverse leaf spring (16) extending in the transverse direction of the vehicle is supported on the body (14) via at least two link elements (24, 26) which are coupled in an articulated manner to the body (14) at respective first bearing points (A, B) spaced apart from each other in the transverse direction of the vehicle, and are coupled in an articulated manner to the transverse leaf spring device (12) at respective second bearing points (C, D) which are arranged lower in the vertical direction of the vehicle than the first bearing points (A, B) and are spaced apart from each other in the transverse direction of the vehicle,
and
the distance (D2), running in the transverse direction of the vehicle, between the second bearing points (C, D) is greater than the distance (D1), running in the transverse direction of the vehicle, between the first bearing points (A, B),
**characterized in that**
the second bearing points (C, D) are arranged lower in the vertical direction of the vehicle than the transverse leaf spring (16).

2. Support arrangement (10) according to Claim 1,
**characterized in that**
the first bearing points (A, B) are arranged between the second bearing points (C, D) in the transverse direction of the vehicle.

3. Support arrangement (10) according to either of Claims 1 and 2,
**characterized in that**
the link elements (24, 26) are coupled at the first bearing points (A, B) to the body (14) so as to be pivotable thereto about respective pivot axes (32, 34) running in the longitudinal direction of the vehicle, and/or **in that** the link elements (24, 26) are coupled at the second bearing points (C, D) to the transverse leaf spring device (12) so as to be pivotable relative thereto about respective pivot axes (33, 35) running in the longitudinal direction of the vehicle.

4. Support arrangement (10) according to Claim 3,
**characterized in that**
the link elements (24, 26) are coupled to the transverse leaf spring device (12) via respective bracket elements (36, 38) which are arranged on a lower side (40) of the transverse leaf spring device (12), in particular of the transverse leaf spring (16), said lower side pointing away downwards from the body (14) in the vertical direction of the vehicle.

5. Motor vehicle with a wheel suspension which has at least one supporting arrangement (10) according to one of the preceding claims, wherein lateral vehicle wheels (20) of the motor vehicle are supported on the body (14) of the motor vehicle with the aid of the transverse leaf spring device (12).

**Revendications**

1. Système de support (10) d'un dispositif de ressort à lame transversale (12) sur une structure (14) d'un véhicule automobile, dans lequel le dispositif de ressort à lame transversale (12) comprenant au moins un ressort à lame transversale (16) s'étendant dans la direction transversale du véhicule est supporté sur la structure (14) par au moins deux éléments de bielle (24, 26), qui sont couplés de façon articulée à la structure (14) en des premiers points d'appui respectifs (A, B) espacés l'un de l'autre dans la direction transversale du véhicule et de façon articulée au dispositif de ressort à lame transversale (12) en des deuxièmes points d'appui respectifs (C, D) disposés plus bas que les premiers points d'appui (A, B) et espacés l'un de l'autre dans la direction transversale du véhicule, et la distance (D2) s'étendant dans la direction transversale du véhicule entre les deuxièmes points d'appui (C, D) est plus grande que la distance (D1) s'étendant dans la direction transversale du véhicule entre les premiers points d'appui (A, B),
**caractérisé en ce que** les deuxièmes points d'appui (C, D) sont disposés plus bas que le ressort à lame transversale (16) dans la direction de la hauteur du véhicule.

2. Système de support (10) selon la revendication 1,
**caractérisé en ce que** les premiers points d'appui (A, B) sont disposés entre les deuxièmes points d'appui (C, D) dans la direction transversale du véhicule.

3. Système de support (10) selon une des revendications 1 ou 2, **caractérisé en ce que** les éléments de bielle (24, 26) sont couplés à la structure (14) par les premiers points d'appui (A, B) de façon pivotante par rapport à celle-ci autour d'axes de pivotement respectifs (32, 34) s'étendant dans la direction longitudinale du véhicule et/ou **en ce que** les éléments de bielle (24, 26) sont couplés au dispositif de ressort à lame transversale (12) par les deuxièmes points d'appui (C, D) de façon pivotante autour d'axes de pivotement respectifs (33, 35) s'étendant dans la direction longitudinale du véhicule.

4. Système de support (10) selon la revendication 3, **caractérisé en ce que** les éléments de bielle (24, 26) sont couplés au dispositif de ressort à lame transversale (12) au moyen d'éléments de console respectifs (36, 38), qui sont disposés sur un côté inférieur (40) du dispositif de ressort à lame transversale (12), en particulier du ressort à lame transversale (16), orienté vers le bas à l'opposé de la structure (14) dans la direction de la hauteur du véhicule.

5. Véhicule automobile doté d'une suspension de roues, qui présente au moins un système de support (10) selon l'une quelconque des revendications précédentes, dans lequel des roues de véhicule latérales (20) du véhicule automobile sont appuyées sur la structure (14) par l'intermédiaire du dispositif à lame de ressort transversale (12).

FIG. 1a

FIG. 1b

FIG. 1c

FIG. 1d

FIG. 1a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4201180 A1
- EP 1155882 A1
- US 1776732 A
- EP 0994270 A2
- JP H07179112 A